(19) **Europäisches Patentamt**
**European Patent Office**
**Office européen des brevets**

(11) **EP 1 715 198 B1**

(12) **EUROPÄISCHE PATENTSCHRIFT**

(45) Veröffentlichungstag und Bekanntmachung des Hinweises auf die Patenterteilung:
**20.02.2008 Patentblatt 2008/08**

(51) Int Cl.:
*F16B 25/10* (2006.01)      *F16B 33/00* (2006.01)
*F16B 33/02* (2006.01)

(21) Anmeldenummer: **06008935.6**

(22) Anmeldetag: **26.04.2005**

(54) **Verbindungsanordnung mit einem Kunststoff-Trägerteil und einem Kunststoff-Gewindeelement**

Connecting arrangement with a plastic carrier part and a plastic thread element

Arrangement de relation avec une pièce en plastique de porteur et un élément en plastique de fil

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **30.04.2004 DE 102004021484**

(43) Veröffentlichungstag der Anmeldung:
**25.10.2006 Patentblatt 2006/43**

(62) Dokumentnummer(n) der früheren Anmeldung(en) nach Art. 76 EPÜ:
**05009142.0 / 1 591 675**

(73) Patentinhaber: **Böllhoff Verbindungstechnik GmbH**
**33649 Bielefeld (DE)**

(72) Erfinder: **Süssenbach, Rainer**
**33803 Steinhagen (DE)**

(74) Vertreter: **Hauck Patent- und Rechtsanwälte**
**Schwanthalerstrasse 106**
**80339 München (DE)**

(56) Entgegenhaltungen:
WO-A-94/04834            DE-A1- 3 336 277
DE-A1- 4 206 884         DE-A1- 4 227 274

**Beschreibung**

Die vorliegende Erfindung betrifft eine Verbindungsanordnung mit einem Trägerteil aus Kunststoff und einem Gewindeelement aus Kunststoff, welches in eine Aufnahmebohrung des Trägerteils eingeschraubt ist und einen Kern sowie ein Außengewinde aufweist, das beim Einschrauben in die glattwandig ausgebildete Aufnahmebohrung des Trägerteils ein Gegengewinde in der Aufnahmebohrung formt. Die Erfindung betrifft ferner ein Gewindeelement in Form einer Schraube oder Gewindebuchse für eine derartige Verbindungsanordnung sowie ein Werkzeug und ein Verfahren zum Herstellen einer Verbindungsanordnung (DE 4227272 A).

Derartige Verbindungsanordnungen mit einem Kunststoffträgerteil und einem Kunststoff-Gewindeelement in Form einer Schraube oder einer Gewindebuchse mit einem "selbstfurchenden" Außengewinde sind bekannt, s. z. B. DE 42 27 272 A1, DE 42 27 274 C2, und DE 23 17736. Die hierbei verwendeten Gewindeelemente werden üblicherweise mit einem ganz speziellen Gewindeprofil ausgestattet, damit sie ihre selbstfurchende Funktion erfüllen können.

So offenbart beispielsweise die DE 42 27 272 A1 ein Gewindeelement mit einem sogenannten Rundprofil, bei dem der Gewindegang in einem Axialschnitt ein kreisbogenförmiges Profil hat, wobei die Windungen des Gewindeganges in axialer Richtung durch kleine Zwischenräume voneinander getrennt sind. Aus der DE 42 27, 274 C2 ist eine Gewindebuchse mit einem Außengewinde bekannt, dessen Gewindegang eine in Einschraubrichtung von einem Kleinstwert bis zu einem Größtwert zunehmende Gewindehöhe hat, um beim Größtwert der Gewindehöhe einen Absatz zu bilden, der als Ausdrehsperre dienen soll. Das Gewinde ist in diesem Fall als Spitzgewinde ausgebildet.

Die DE 32 01 846 A1 und DE 91 15 162 U1 offenbaren selbstfurchende Gewindeelemente, deren Gewinde ein für die selbstfurchende Funktion in spezieller Weise ausgebildetes Profil haben. Allerdings bestehen diese Gewindeelemente nicht aus Kunststoff.

Aus der DE 23 17 736 ist eine selbstfurchende Schraube aus Kunststoff bekannt, bei der durch in Längsrichtung verlaufende Nuten in jedem Gewindegang zwei diametral gegenüberliegende Schneidkanten gebildet werden, die in Einschraubrichtung wirksam sind, um beim Eindrehen der Schraube in die Aufnahmebohrung des Trägerteils das Gegengewinde zu schneiden.

Wenn auch selbstfurchende Gewindeelemente aus Kunststoff Eingang in die Praxis gefunden haben, sind weitere Verbesserungen wünschenswert. Ein Nachteil der vorbekannten Gewindeelemente aus Kunststoff besteht darin, dass sie im Allgemeinen nur für Trägerteile aus einem speziellen Kunststoff geeignet sind, während sie für eine Vielzahl anderer Kunststoffe ungeeignet sind. Häufig lassen die "selbstfurchenden" Eigenschaften des Kunststoff-Gewindeelementes zu wünschen übrig. Aufgrund von Kerb- und/oder Klemmwirkungen beim Gewindeformen kann es zur Beeinträchtigung der Festigkeit und Belastbarkeit des Gewindeelementes und damit der Verbindungsanordnung kommen. Auch die Formstabilität des Gewindeelementes ist nicht immer zufriedenstellend. Schließlich sollte auch bei einem kleinen Eindrehmoment eine möglichst hohe Sicherheit gegen unbeabsichtigtes Lösen des Gewindeelementes aus der Aufnahmebohrung des Trägerteils gegeben sein.

Durch die vorliegende Erfindung sollen diese Nachteile vermieden werden. Insbesondere liegt der vorliegenden Erfindung die Aufgabe zugrunde, eine Verbindungsanordnung der oben angegebenen Art, ein Gewindeelement in Form einer Schraube oder eine Gewindebuchse hierfür sowie ein Werkzeug und ein Verfahren zum Herstellen einer derartigen Verbindungsanordnung anzugeben, die eine Optimierung der Verbindungsanordnung und ihres Gewindeelementes im Hinblick auf Gewindeformung, Festigkeit, Belastbarkeit, Formstabilität und Sicherheit gegen unbeabsichtigtes Lösen erlauben.

Die Erfindung sowie vorteilhafte Ausgestaltungen der Erfindung sind in den Ansprüchen definiert.

Gemäß der Erfindung hat das Außengewinde des Gewindeelementes eine speziell ausgebildete Schneidgeometrie, die in Anspruch 1 definiert ist, wobei spezielle Ausführungsformen der Schneidgeometrie in den Ansprüchen 2 bis 6 definiert sind. Weitere Einzelheiten des Außengewindes des Gewindeelementes ergeben sich aus den Ansprüchen 7 bis 9.

Das Gewindeelement wird zweckmäßigerweise an seinem einen Ende mit einem speziell ausgebildeten Anschnittbereich versehen, der in den Ansprüchen 10 bis 14 definiert wird.

Ist das Gewindeelement als Schraube ausgebildet, so wird der Übergangsbereich zwischen dem Schraubenschaft und dem Schraubenkopf in spezieller Weise ausgebildet, wie sich den Ansprüchen 15 bis 19 entnehmen lässt.

Das Gewindeelement kann auch als Gewindebuchse ausgebildet werden, wie sich aus den Ansprüchen 20 und 21 ergibt.

Gemäß einer Weiterbildung der Erfindung ist eine abgestimmte Werkstoffauswahl der Kunststoffe für das Gewindeelement einerseits und das Trägerteil andererseits vorgesehen, wie sich aus den Ansprüchen 22 und 23 ergibt.

Gemäß einem weiteren Aspekt der Erfindung ist ein Verfahren zum Herstellen einer speziell ausgebildeten Verbindungsanordnung vorgesehen, welches in den Ansprüchen 25 und 26 definiert ist.

Wie aus dem Vorstehenden bereits hervorgeht, betrifft die Erfindung zusätzlich zu der Verbindungsanordnung und dem Verfahren zum Herstellen der Verbindungsanordnung das Gewindeelement selbst, das eine Schraube oder eine Gewindebuchse sein kann (Anspruche 24).

Im folgenden werden weitere Einzelheiten der Erfindung anhand von in den Zeichnungen dargestellten Ausführungsbeispielen erläutert. In den Zeichnungen zeigt:

Fig. 1 einen Schnitt durch eine Verbindungsanordnung mit einer Hälfte eines Gewindeelementes in Form einer Schraube;
Fig. 2 eine teilweise geschnittene Seitenansicht einer erfindungsgemäß ausgebildeten Schraube;
Fig. 3 eine perspektivische Ansicht der Schraube in Fig. 2;
Fig. 4 eine Draufsicht auf die Schraube in Fig. 2;
Fig. 5 eine der Fig. 2 entsprechende Ansicht einer anderen Ausführungsform einer erfindungsgemäß ausgebildeten Schraube;
Fig. 6 eine perspektivische Ansicht der Schraube in Fig. 5;
Fig. 7 eine teilweise geschnittene Seitenansicht einer erfindungsgemäß ausgebildeten Gewindebuchse;
Fig. 8 einen Querschnitt durch die Gewindebuchse in Fig. 7,
Fig. 9 einen Längsschnitt durch eine andere Ausführungsform einer erfindungsgemäß ausgebildeten Gewindebuchse;
Fig. 10 einen Querschnitt durch die Gewindebuchse in Fig. 9;
Fig. 11 eine Seitenansicht einer weiteren Ausführungsform einer erfindungsgemäß ausgebildeten Gewindebuchse;
Fig. 12 einen Querschnitt durch die Gewindebuchse in Fig. 11;
Fig. 13 eine Schnittansicht einer Ausführungsform A des Gewindeprofils eines erfindungsgemäß ausgebildeten Gewindeelementes;
Fig. 14 eine vergrößerte Schnittdarstellung des Gewindeprofils in Fig. 13;
Fig. 15 eine der Fig. 14 entsprechende Schnittansicht einer Ausführungsform B des Gewindeprofils;
Fig. 16 eine der Fig. 14 entsprechende Schnittansicht des Gewindeprofils in Fig. 15;
Fig. 17 einen Querschnitt durch die Ausführungsform A einer erfindungsgemäß ausgebildeten Schraube zum Veranschaulichen ihrer Schneidgeometrie;
Fig. 18 einen der Fig. 17 entsprechenden Querschnitt der Ausführungsform B einer erfindungsgemäß ausgebildeten Schraube;
Fig. 19 eine teilweise geschnittene Seitenansicht des Anschnittbereiches der Ausführungsform A einer erfindungsgemäß ausgebildeten Schraube;
Fig. 20 einen Querschnitt in Blickrichtung der Pfeile I-I in Fig. 19;
Fig. 21 eine der Fig. 19 entsprechende Seitenansicht der Ausführungsform B einer erfindungsgemäß ausgebildeten Schraube;
Fig. 22 einen Längsschnitt durch den Übergangsbereich zwischen Schraubenschaft und Schraubenkopf einer erfindungsgemäß ausgebildeten Schraube;
Fig. 23 eine Schnittansicht in Blickrichtung der Pfeile II-II in Fig. 22;
Fig. 24 eine teilweise geschnittene Seitenansicht eines Werkzeuges zum Herstellen einer Verbindungsanordnung aus Gewindebuchse und Trägerteil;
Fig. 25 eine der Fig. 24 entsprechende Seitenansicht eines anderen Ausführungsbeispiels eines Werkzeuges zum Herstellen einer Verbindungsanordnung aus Gewindebuchse und Trägerteil.

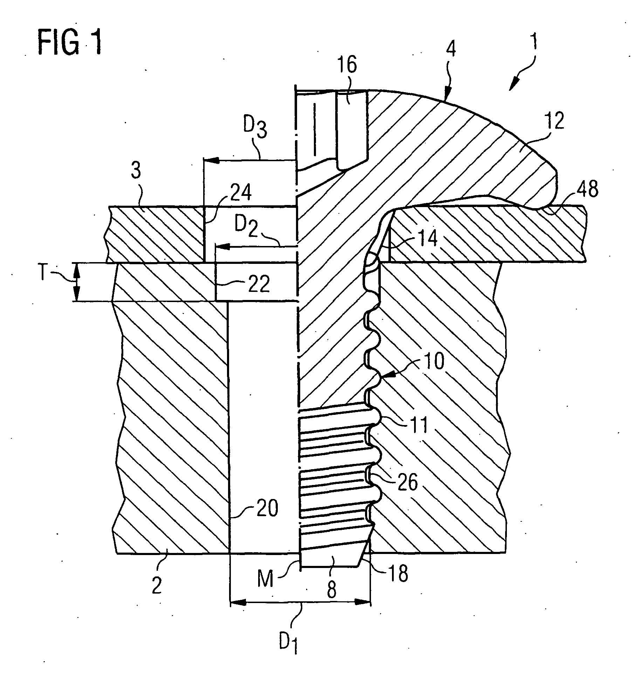

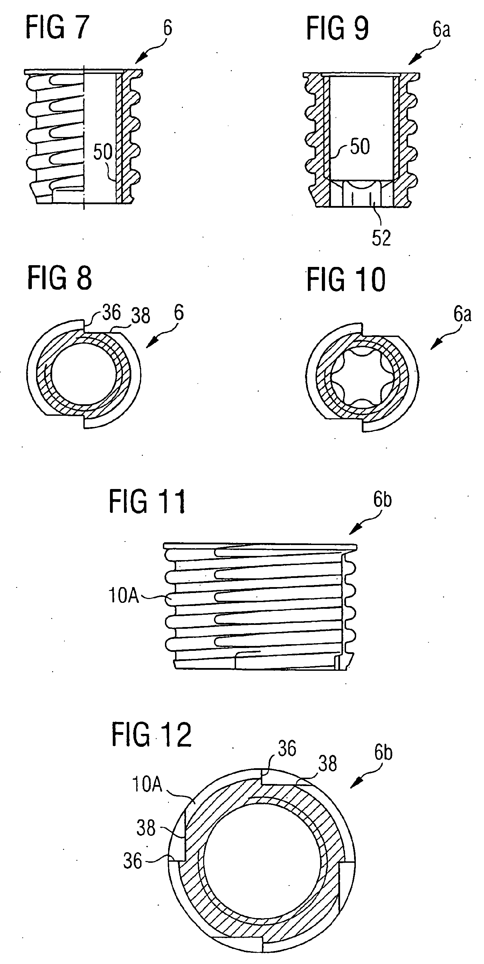

Die Fig. 1 zeigt eine Verbindungsanordnung 1 mit einem Trägerteil 2 aus Kunststoff und einem Gewindeelement in Form einer Schraube 4, ebenfalls aus Kunststoff. Im dargestellten Ausführungsbeispiel ist die Verbindungsanordnung 1 als Schraubverbindung ausgebildet, bei der die Schraube 4 das Trägerteil 2 mit einem weiteren Bauteil 3 verspannt. Ist dagegen das Gewindeelement als Gewindebuchse 6 ausgebildet (Fign. 7 bis 12), so besteht die Verbindungsanordnung lediglich aus der Gewindebuchse und dem Trägerteil 2.

Die Schraube 4 besteht aus einem Schraubenschaft mit einem massiven Kern 8 und einem Außengewinde 10 mit einem einzelnen Gewindegang 11, einem Schraubenkopf 12, einem Übergangsbereich 14 zwischen dem Schraubenschaft und dem Schraubenkopf 12, einem Antriebsmittel 16 und einem Anschnittbereich 18 an dem vom Schraubenkopf abgewandten Ende des Kerns 8.

Die Fig. 1 zeigt die Anordnung auf der linken Seite vor und auf der rechten Seite nach dem Eindrehen der Schraube 4 in die Aufnahmebohrung 20. Wie dargestellt, ist die Aufnahmebohrung 20 vor dem Eindrehen der Schraube 4 glattwandig ausgebildet. Das Außengewinde 10 der Schraube 4 ist "selbstfurchend" bzw. gewindeformend ausgebildet, so dass es beim Eindrehen der Schraube 4 in die Aufnahmebohrung 20 ein Gegengewinde 26 in der Aufnahmebohrung 20 formt, wie im folgenden noch genauer erläutert wird.

Wie ferner in Fig. 1 zu sehen ist, hat das Trägerteil 2 eine Senkbohrung 22, deren Durchmesser $D_2$ etwas größer als der Durchmesser $D_1$ der Aufnahmebohrung 20 ist und im wesentlichen dem Außendurchmesser des Außengewindes 10 entspricht. Das Bauteil 3 hat eine Durchgangsbohrung 24, deren Durchmesser $D_3$ etwas größer als die Durchmesser $D_1$ und $D_2$ ist.

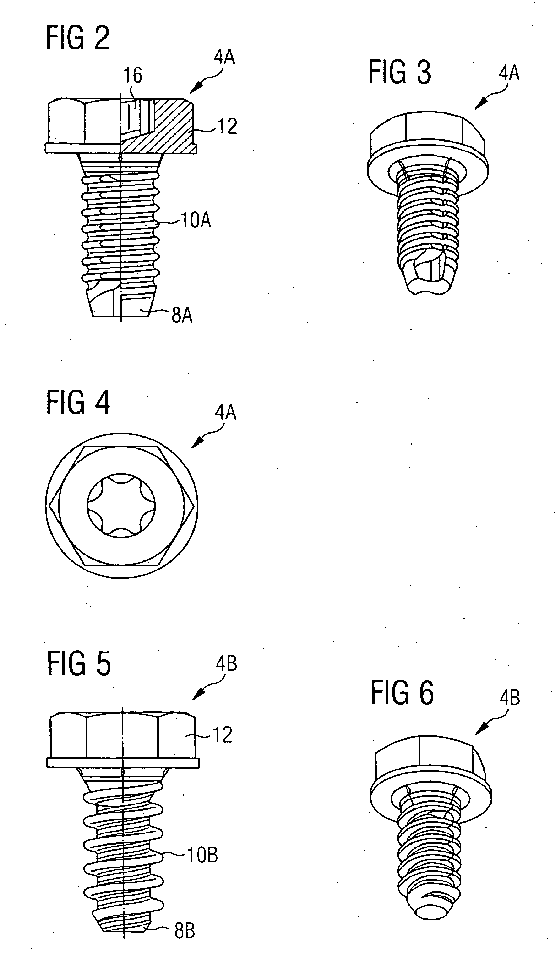

Die in den Fign. 2 bis 6 dargestellten Schrauben 4A und 4B unterscheiden sich von der Schraube 4 in Fig. 1 lediglich hinsichtlich der Ausbildung des Schraubenkopfes, der im Fall der Schrauben 4A und 4B als Multifunktionskopf mit einem äußeren und inneren Antriebsmittel 16 versehen ist. Die Antriebsmittel können in beliebiger Weise ausgebildet werden. Im dargestellten Ausführungsbeispiel ist das äußere Antriebsmittel als Sechskant mit Bundauflage ausgebildet, während das innere Antriebsmittel ein Innensechsrund ist, aber auch beispielsweise ein Kreuzschlitz sein kann. Die Schrauben 4A und 4B ihrerseits unterscheiden sich hinsichtlich ihres Gewindeprofils, wie im folgenden genauer erläutert wird.

Wie bereits eingangs dargelegt wurde, betrifft die Erfindung verschiedene Aspekte der Verbindungsanordnung, zu denen das Gewindeprofil, die Schneidgeometrie und der Anschnittbereich der Schraube oder Gewindebuchse, der Übergangsbereich zwischen dem Schraubenschaft und dem Schraubenkopf, der Werkstoff der Schraube bzw. der Gewindebuchse und des Trägerteiles, ein Werkzeug zum Einbringen der Gewindebuchse in das Trägerteil und ein Verfahren zum Herstellen einer Verbindungsanordnung gehören. Im folgenden werden diese Aspekte der Erfindung im einzelnen genauer beschrieben.

Zu beachten ist hierbei, dass die folgenden Ausführungen sowohl für die Schraube wie auch die Gewindebuchse gelten, sofern nicht ausdrücklich etwas anderes gesagt wird.

Gewindeprofil

Das Gewindeprofil der Kunststoffschraube bzw. -gewindebuchse ist erfindungsgemäß so ausgelegt, dass es beim Eindringen in die Aufnahmebohrung 20 des Trägerteils 2 in optimaler Weise das Gegengewinde 26 formt. Die Formung des Gegengewindes 26 kann durch einen Schneidvorgang oder durch eine Materialverformung oder durch eine Kombination beider Vorgänge erfolgen.

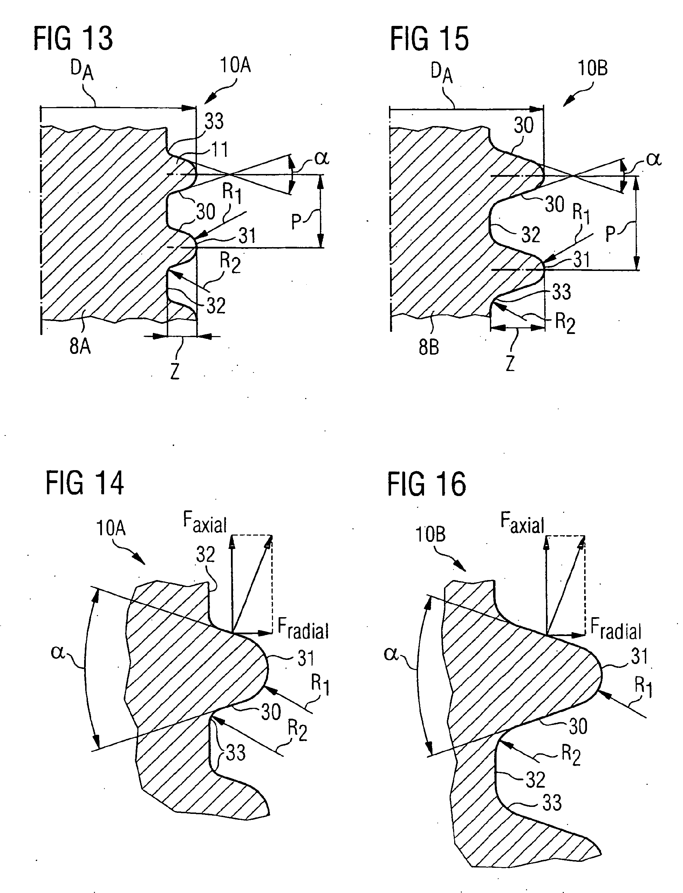

Die vorliegende Erfindung geht von der Erkenntnis aus, dass bei Trägerteilen eines Werkstoffes, der zum Formen des Gegengewindes überwiegend einen Schneidvorgang erfordert, ein etwas anderes Gewindeprofil der Kunststoffschraube bzw. -gewindebuchse als bei Trägerteilen eines Werkstoffes, der zum Formen des Gegengewindes überwiegend eine Materialverformung erfordert, zweckmäßig ist. Bei den in den Fign. 13 bis 21 dargestellten bevorzugten Ausführungsbeispielen des Gewindeprofils gemäß der Erfindung sind daher zwei unterschiedliche Ausführungsformen A und B dargestellt. Die Ausführungsform A ist insbesondere für harte, feste Werkstoffe des Trägerteils bestimmt, bei denen für das Eindringen in den Werkstoff des Trägerteils überwiegend ein Schneidvorgang erforderlich ist, während die Ausführungsform B für Werkstoffe hoher Dehnung und Schlagzähigkeit bestimmt ist, die zum Formen des Gegengewindes überwiegend eine Materialverformung erfordern.

Die grundsätzliche Form des Gewindeprofils ist allerdings für beide Ausführungsformen A und B gleich:

Wie die Fign. 13 bis 16 zeigen, haben die Außengewinde 10A und 10B jeweils einen Gewindegang 11, der über mehrere Windungen um den Kern 8A bzw. 8B verläuft. Der Gewindegang 11 hat, in einem Axialschnitt gesehen, ein symmetrisches Profil, das von zwei geradlinigen Flanken 30 gebildet wird, welche bezüglich einer radialen Linie symmetrisch angeordnet sind. Die Flanken 30 sind an ihrer Flankenspitze jeweils durch eine - vorzugsweise kreisbogenförmige - Rundung 31 mit dem Radius R1 verbunden.

Der Kern 8A bzw. 8B hat zwischen den Windungen des Gewindegangs 11 eine zylindrische Außenfläche 32, die mit den Flanken 30 des Gewindeganges 11 jeweils durch eine - vorzugsweise kreisbogenförmige-Rundung 33 verbunden sind. Der axiale Abstand zwischen den Windungen des Gewindeganges 11 ist so gewählt, dass der Freiraum zwischen den Windungen des Gewindeganges 11 ein größeres Volumen als der Gewindegang hat.

Der Profilwinkel $\alpha$, den die Flanken 30 des Gewindeganges 11 miteinander einschließen, wird aus noch zu erläuternden Gründen relativ klein gewählt. Der Profilwinkel $\alpha$ liegt zweckmäßigerweise im Bereich zwischen 30° und 50° und beträgt vorzugsweise ungefähr 40°.

Das soweit beschriebene Gewindeprofil ist für die Ausführungsformen A und B gleich. Unterschiede sind hinsichtlich der Steigung P, der Profilhöhe Z und der Radien R1 und R2 der Rundungen 31 und 33 vorhanden.

Für die Ausführungsform A des Gewindeprofils gelten die folgenden Wertebereiche:

$$P = (0,16 \text{ bis } 0,9) \cdot D_A$$
$$Z = (0,15 \text{ bis } 0,5) \cdot P$$
$$R1 = (0,4 \text{ bis } 0,7) \cdot Z$$
$$R2 = (0,5 \text{ bis } 0,5) \cdot Z$$
$$\alpha = 30° \text{ bis } 50°$$

Hierin bedeuten P die Steigung, Z die Profilhöhe, R1 der Krümmungsradius der Rundungen 31 an der Flankenspitze, R2 der Krümmungsradius der Rundungen 33 zwischen der zylindrischen Außenfläche 32 des Kerns 8 und den Flanken 30 des Gewindeganges 11, und $D_A$ der Außendurchmesser des Gewindeganges 11, wie aus den Figuren 13 bis 16 hervorgeht.

**4**

Für das Gewindeprofil der Ausführungsform A (Fign. 13, 14) gelten die folgenden bevorzugten Werte:

P = 0,25·$D_A$
Z = 0,38·P
R1 = 0,6·Z
R2 = 0,35·Z
$\alpha$ = 40°

Für das Gewindeprofil der Ausführungsform B gelten die folgenden Wertebereiche:

P = (0,25 bis 0,9) ·$D_A$
Z = (0,35 bis 0,65)·P
R1 = (0,25 bis 0,5)·Z
R2 = (0,25 bis 0,5)·Z
$\alpha$ = 30° bis 50°

Für das Gewindeprofil der Ausführungsform B (Fign. 15, 16) gelten die folgenden bevorzugten Werte:

P = 0,33·$D_A$
Z = 0,55·P
R1 = 0,3·Z
R2 = 0,3.Z
$\alpha$ = 40°

Die Verwendung eines relativ kleinen Profilwinkels $\alpha$ hat den Vorteil, dass der Gewindegang 11 beim Einschrauben in die Aufnahmebohrung 20 des Trägerteils 2 eine relativ große Axialkraft $F_{axial}$, jedoch nur eine kleine radiale Kraft $F_{radial}$ auf den Werkstoff des Trägerteils 2 ausübt. Dies - in Verbindung mit dem relativ großen Radius R1 der Rundung 31 - sorgt dafür, dass beim Formen des Gegengewindes 26 Werkstoff des Trägerteils 2 in optimaler Weise, insbesondere ohne schädliche Kerbwirkung und schadensfrei ohne Klemmwirkung, in den Freiraum zwischen den Windungen des Gewindeganges 11 eindringen kann. Da ferner das Volumen des Freiraums zwischen den Windungen des Gewindeganges 11 deutlich größer als das Volumen des Gewindeganges 11 ist, wird vermieden, dass Werkstoff des Trägerteils in Anlage mit der zylindrischen Außenfläche 30 des Kerns 8A bzw. 8B gelangt, was anderenfalls zu einer schädlichen Klemmwirkung führen könnte. Ein weiterer Vorteil dieser Dimensionierung des Freiraumes besteht darin, dass im Bereich eines die Flankenspitzen umhüllenden gedachten Zylinders relativ viel Werkstoff des Trägerteils vorhanden ist. Bei einer auf die Verbindungsanordnung 1 ausgeübten axialen Auszugskraft steht der Werkstoff des Trägerteils im Bereich dieses gedachten umhüllenden Zylinders unter Scherlastbeanspruchung. Das größere Volumen und die günstige Kerbwirkungszahl des Werkstoffes des Trägerteils im Scherlastbereich sorgen dann für einen gewissen Ausgleich gegenüber der geringeren Festigkeit des Werkstoffes des Trägerteils im Vergleich zum Werkstoff der Kunststoffschraube bzw. -gewindebuchse.

Das heißt im Ergebnis:

a) Die geringe Radialkraft $F_{radial}$ und der groß ausgelegte Radius R1 sorgen dafür, dass die Kunststoffschraube bzw. -buchse mit minimaler Kerbwirkung und ohne schädliche Klemmwirkung in die Aufnahmebohrung 20 des Trägerteils 2 eingedreht werden kann.

b) Der relativ große Freiraum zwischen den Windungen des Gewindeganges 11 und die günstige Kerbwirkungszahl sorgen für eine optimale axiale Ausziehfestigkeit der Verbindungsanordnung 1.

Das in den Fign. 13 bis 16 dargestellte Gewindeprofil mit den oben angegebenen bevorzugten Werten eignet sich auch zur Herstellung eines Feingewindes (nicht gezeigt). Hierzu ist lediglich erforderlich, dass unter Beibehaltung des Gewindeprofils mit den dargestellten und angegebenen bevorzugten Werten lediglich der Außendurchmesser $D_A$ vergrößert wird, so dass sich das Steigungsverhältnis $P/D_A$ entsprechend verkleinert.

Das in den Fign. 13 bis 16 dargestellte Gewindeprofil besitzt nur einen Gewindegang. Das Außengewinde 10A bzw. 10B kann jedoch auch als mehrgängiges Gewinde ausgebildet werden, indem die Steigung P bis zu Werten am oberen Ende des bevorzugten Wertebereiches (bis 0,9·$D_A$) vergrößert wird. Auch bei diesen relativ großen Werten der Steigung ist der Steigungswinkel des Außengewindes 10A bzw. 10B immer noch kleiner als der Selbsthemmungswinkel der Kunststoffpaarung Gewindeelement/Trägerteil. Das mehrgängige Gewinde hat dann den Vorteil, dass die Kunststoffschraube bzw. -gewindebuchse, ähnlich einem Schnellverschluss, nur mit wenigen Umdrehungen in die Aufnahmebohrung des Trägerteils eingebracht werden kann. Die Kunststoffschraube bzw. -gewindebuchse lässt sich nach dem Lösen problemlos wieder montieren, wobei die Selbsthemmung für einen sicheren Sitz der Schraube bzw. Gewindebuchse in der Aufnahmebohrung sorgt.

Schneidgeometrie des Gewindeprofils

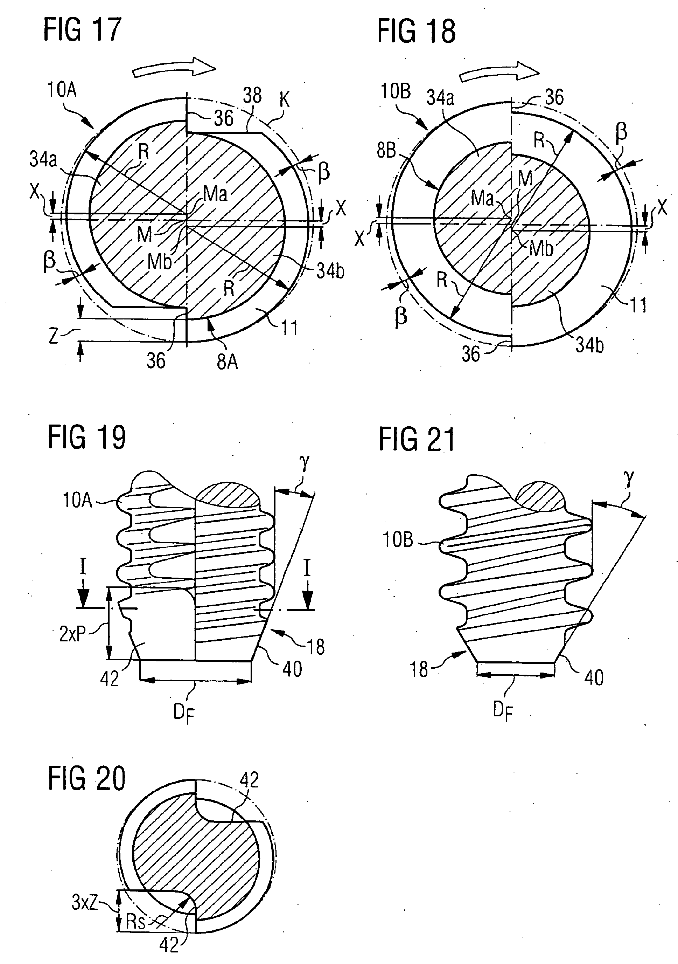

In weiterer Ausgestaltung der Erfindung sind die Gewindeprofile der Ausführungsformen A und B mit Schneidkanten 36 und einem Freiwinkel β an ihren Umrissen versehen, um das Eindringen der Kunststoffschraube bzw. -gewindebuchse in den Werkstoff des Trägerteils zu erleichtern. Diese Schneidgeometrie der Gewindeprofile ist in den Fign. 17 und 18 dargestellt.

Zum Erzeugen dieser Schneidgeometrie ist die Kunststoffschraube (bzw. die Gewindebuchse) aus mehreren Winkelsegmenten zusammengesetzt, wobei in den dargestellten Ausführungsformen A und B der Fign. 17 und 18 zwei Winkelsegmente 34a und 34b vorgesehen sind. Die Winkelsegmente 34a und 34b haben kreisbogenförmige Umrisse sowohl am Gewindegang 11 wie auch am Kern 8A bzw. 8B, deren Krümmungsmittelpunkte Ma, Mb gegenüber der Mittelachse M des Kerns 8A bzw. 8B in entgegengesetzten radialen Richtungen um einen Betrag X versetzt sind. Die Folge ist, dass die Winkelseg-mente 34a, 34b sowohl am Umfang des Kerns wie auch am Umfang des Gewindeganges stufenförmig. gegeneinander abgesetzt sind, wodurch jeweils eine Schneidkante 36 gebildet wird. Wie durch die Pfeile in Fign. 18 und 19 angedeutet ist, sind die Schneidkanten 36 so angeordnet, dass sie in Einschraub-richtung wirksam sind, um das Eindringen in den Werkstoff des Trägerteils zu erleichtern.

Durch den radialen Versatz der Winkelsegmente 34a und 34b entsteht ferner am Umfang des Gewindeganges 11, jeweils angrenzend an eine Schneidkante 36, ein Freiwinkel β zwischen dem Umriss des Gewindeganges und einem strichpunktiert angedeuteten umhüllenden Kreis K. Dieser Freiwinkel β sorgt für einen sichelförmigen "Freiraum", der ausgehend von der jeweiligen Schneidkante 36 entgegen der Schraubrichtung größer wird.

Für den radialen Versatz X gelten die folgenden bevorzugten Werte:

$$X \; = \; 0{,}10 \text{ mm für } D_{\text{Nenn}} \; \leq \; 8 \text{ mm}$$

$$X \; = \; 0{,}15 \text{ mm für } D_{\text{Nenn}} \; > 8 \text{ mm und } D_{\text{Nenn}} \; \leq 12 \text{ mm}$$

$$X \; = \; 0{,}20 \text{ mm für } D_{\text{Nenn}} \; > 12 \text{ mm}$$

Unter dem Nenndurchmesser $D_{\text{Nenn}}$ der Winkelsegmente 34a und 34b ist das zweifache des Radius R der bogenförmigen Umrisse des Gewindeganges 11 zu verstehen.

Die oben angegebenen Werte für X führen zu einem Freiwinkel β in der Größenordnung von 1°. Es sind jedoch auch hiervon abweichende Frei-winkel möglich, wobei der Freiwinkel zwischen 0,5° und 5°, vorzugsweise zwischen 0,5° und 2° liegen sollte.

Für die unterschiedlichen Ausführungsformen A und B des Gewindeprofils können die gleichen Werte für X und β verwendet werden. Unterschiedlich ist jedoch, dass bei der Ausführungsform A (Fig. 17), bei der ja das Formen des Gegengewindes überwiegend einen Schneidvorgang erfordert, eine Spannut 38 vorgesehen ist, die sich über die gesamte Länge des Gewindeelementes erstreckt und an der Schneidkante 36 so angrenzt, dass sie die Schneidkante 36 entsprechend vergrößert. Bei der Ausführungsform B (Fig. 18), bei der ja das Formen des Gegengewindes überwiegend eine Materialverformung erfordert, ist eine entsprechende Spannut nicht erforderlich.

Bei den in den Fign. 17 und 18 dargestellten Ausführungsbeispielen der Schneidgeometrie ist das Gewindeelement aus zwei radial gegeneinander versetzten Winkelsegmenten zusammengesetzt. Es sei jedoch darauf hingewiesen, dass insbesondere bei größerem Durchmesser des Gewindeelementes auch mehr als zwei Winkelsegmente vorgesehen sein könnten. So besteht beispielsweise die Gewindebuchse 6b der Fig. 11 aus vier Winkelsegmenten mit vier Schneidkanten 36 und vier Spannuten 38.

Die oben beschriebene Geometrie des Gewindeprofils, insbesondere die beschriebene Schneidgeometrie, sorgt zum einen für ein kleines Eindrehmoment beim Einschrauben in die Aufnahmebohrung und zum anderen für eine hohe Sicherheit gegen ein selbständiges Lösen durch Drehen entgegen der Einschraubrichtung.

Einen maßgeblichen Beitrag zum Erzielen eines kleinen Eindrehmomentes liefert die durch den radialen Versatz der Winkelsegmente 34a und 34b gebildeten Schneidkanten 36. Bei den in den Fign. 17 und 18 dargestellten Ausführungsformen A und B sind die Schneidkanten 36 in einer Axialebene angeordnet, die beim Herstellen des Gewindeelementes durch Spritzgießen in der Trennebene der Spritzgießformen liegt. Hierdurch wird die Schaffung scharfer Schneidkanten sichergestellt.

Die Sicherheit gegen unbeabsichtigtes Lösen der Verbindungsanordnung 1 ergibt sich aus mehreren Faktoren:

Entgegen der herkömmlichen Schraubensicherung im Maschinenbau über Dehnung und Flächenpressung der Schraube entsteht bei dem Gewindeelement aus Kunststoff eine Gewindesicherung aus der Relaxation des Kunststoffes des Trägerteils in radial einwärtiger Richtung um das Gewindeprofil herum. Von besonderer Bedeutung ist in diesem Zusammenhang der oben beschriebene radiale Versatz der Winkelsegmente 34a und 34b und der sich hieraus ergebende Freiwinkel β. Wenn nämlich das Gewindeelement in die Aufnahmebohrung des Trägerteils eingeschraubt ist, führt eine Relaxation des Kunststoffes des Trägerteils dazu, dass Werkstoff des Trägerteils in den durch den Freiwinkel β gebildeten "Freiraum" zwischen dem Umriss des Gewindeganges 11 und dem gedachten umhüllenden Kreis K eindringt. Dies verhindert ein Drehen des Gewindeelementes entgegen der Einschraubrichtung und sorgt somit für eine hohe Sicherheit gegen unbeabsichtigtes Lösen der Verbindungsanordnung 1. Wie Untersuchungen ergeben haben, ist das Lösemoment der Verbindungsanordnung um einen Faktor größer als das Eindrehmoment.

Ein weiterer Beitrag zur Sicherung der Verbindungsanordnung 1 gegen unbeabsichtigtes Lösen ergibt sich aus der Selbsthemmung, die sich aufgrund der angegebenen Werte für die Steigung und dem Reibbeiwert der Kunststoffpaarung Gewindeelement/Trägerteil einstellt. Bei den oben angegebenen bevorzugten Werten ergibt sich für das Gewindeprofil der Ausführungsform A ein Steigungswinkel von ungefähr 4,5° und bei der Ausführungsform B von ungefähr 6°. Diese Steigungswinkel liegen deutlich unter dem Grenzwert des Selbsthemmungswinkels für die Kunststoffpaarung Gewindeelement/Trägerteil.

An dieser Stelle ist darauf hinzuweisen, dass die Aufnahmebohrung 20 des Trägerteils 2 (Fig. 1) hinsichtlich ihres Durchmessers $D_1$ im Hinblick auf das Schneid- bzw. Verdrängungsverhalten des Werkstoffes des Trägerteils auf das Gewindeprofil so abzustimmen ist, dass die Außenfläche 32 des Kerns 8A bzw. 8B (Fign. 13 bis 16) beim Eindrehen des Gewindeelementes in die Aufnahmebohrung von der hierbei entstehenden Materialverformung frei bleibt. Die im Einlaufbereich des Trägerteils 2 vorgesehene Senkbohrung 22 (Fig. 1), deren Durchmesser $D_2$ dem Außendurchmesser des Außengewindes 10 der Schraube 4 (mit einer Toleranz von + 0,5mm) entspricht und deren Tiefe T ungefähr gleich der Steigung P ist, sorgt für eine Entlastung der Spannung im Gewindeeinlaufbereich.

## Anschnittbereich

Wie in den Fign. 19 bis 21 dargestellt ist, hat die Schraube 4 an ihrem vom Schraubenkopf abgewandten axialen Ende einen konusförmig ausgebildeten Anschnittbereich 18 mit einer Anschnittfase 40 eines vorgegebenen Fasenwinkels γ und einem als Anschnittdurchmesser $D_F$ bezeichneten kleinsten Durchmesser. Auch hier ist eine unterschiedliche Gestaltung des Anschnittbereiches 18 für die alternativen Ausführungsformen A und B des Gewindeprofils zweckmäßig.

Bei der Ausführungsform A beträgt der Fasenwinkel γ der Anschnittfase 40 vorzugsweise ungefähr 20° und der Anschnittdurchmesser $D_F$ ungefähr das 0,7-fache des maximalen Außendurchmessers $D_A$ des Außengewindes. Bei der Ausführungsform B beträgt der Fasenwinkel γ vorzugsweise ungefähr 30° und der Anschnittdurchmesser $D_F$ vorzugsweise ungefähr $0,5 \cdot D_A$.

Bei der Ausführungsform A ist im Anschnittbereich 18 zweckmäßigerweise ein Spanraum 42 vorgesehen, dessen Höhe 2·P (Fig. 19) und dessen Tiefe 3·Z (Fig. 20) beträgt und der im Querschnitt einen Radius $R_s$ hat. Bei der Ausführungsform B (Fig. 21), die ja zum Formen des Gegengewindes überwiegend eine Materialverformung erfordert, ist ein Spanraum nicht erforderlich.

Der Anschnittbereich 18 tritt als erstes mit dem Werkstoff des Trägerteils in Eingriff und übernimmt somit die erste Lastaufnahme für die Schneid- bzw. Verdrängungsarbeit beim Formen des Gegengewindes. Lässt beim Eindrehen des Gewindeelementes in die Aufnahmebohrung das Standvermögen des Anschnittbereiches nach (indem der Anschnitt "stumpf" wird), so übernehmen die folgenden Windungen des Gewindeprofils mit der oben beschriebenen Schneidgeometrie die Schneid- bzw. Verdrängungsarbeit beim weiteren Eindringen in die Aufnahmebohrung.

## Übergangsbereich zwischen Schraubenschaft und Schraubenkopf

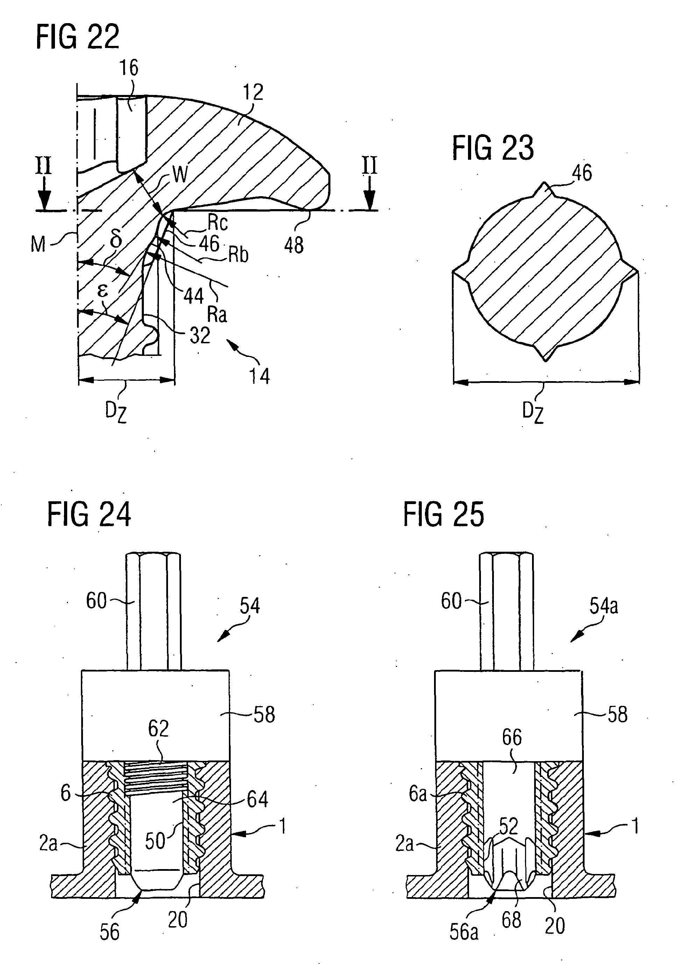

Anhand der Figuren 22 und 23 wird eine bevorzugte Ausbildung des Übergangsbereiches 14 zwischen dem Schraubenschaft 10 und dem Schraubenkopf 12 der Kunststoffschraube 6 erläutert. Wie in diesen Figuren dargestellt, ist die Außenfläche 32 des Kerns 10 des Schraubenschaftes mit der Unterseite des Schraubenkopfes 12 über eine konisch verlaufende Fläche 44 verbunden, die an ihren Enden jeweils mit einer Rundung eines Radius **$R_a$** bzw. **$R_b$** versehen ist. An die Rundung **$R_b$** schließt sich ein kurzer zylindrischer Ansatz an, der durch eine Rundung mit dem Radius **$R_c$** in die Unterseite des Schraubenkopfes 12 übergeht. Die konische Fläche 44 schließt mit der Mittelachse M der Schraube einen Winkel δ in der Größenordnung von 30° ein.

Der beschriebene konische Verlauf des Übergangsbereiches 14 sorgt somit für eine Verteilung der Spannung, die sich im Übergangsbereich 14 einstellt, wenn die Verbindungsanordnung 1 nach Festziehen der Schraube unter Spannung steht. Spannungskonzentrationen im Übergangsbereich 14 werden auf diese Weise vermieden.

Ferner ist der Übergangsbereich 14 so gestaltet, dass er zwischen dem Kern 10 des Schraubenschaftes und dem Schraubenkopf 12 eine Wandstärke W hat, die größer als das 0,5-fache des Durchmessers der Außenfläche 32 des Kerns 10 ist. Hierdurch wird sichergestellt, dass beim Spritzgießen der Schraube Kunststoff ungehindert und ohne Lunkerbildung in den Kopfbereich fließen kann. Außerdem sorgt diese Gestaltung des Übergangsbereichs mit der relativ großen Wandstärke W für eine ausreichende Lastverteilung im verspannten Zustand, wodurch die Bruchgefahr im Übergangsbereich 14 reduziert wird.

Wie in Fig. 22 und insbesondere in Fig. 23 zu sehen ist, sind an der Außenfläche des Übergangsbereichs 14 in Axialebenen liegende Zentrierrippen 46 vorgesehen. Die Außenränder der Zentrierrippen 46 schließen mit der Mittelachse M einen Winkel ε von beispielsweise 20° ein. Der maximale Durchmesser $D_Z$ der Zentrierrippen 46 ist gleich dem Durchmesser $D_3$ der Durchgangsbohrung 24 des Bauteils 3 (Fig. 1) plus 0,5 mm. Die Zentrierrippen 46 legen sich daher beim Verschrauben des Trägerteils 2 mit dem weiteren Bauteil 3 (Fig. 1) an die Umfangswand der Durchgangsbohrung 24 des Bauteils 3 an. Sie erfüllen hierbei sowohl eine Zentrierwirkung wie auch eine Abstützwirkung zur Aufnahme einer Querlast beim Einschrauben der Schraube 4 in die Aufnahmebohrung 20.

Wie aus den Figuren 1 und 22 hervorgeht, ist der Schraubenkopf 12 an seiner Unterseite konkav so ausgebildet, dass sich in seinem Außenbereich eine praktisch kreislinienförmige Ringauflage 48 ergibt, mit der der Schraubenkopf 12 an der Oberseite des Bauteils 3 anliegt. Bei axialer Belastung der Schraube 4 kann die Ringauflage 48 gegebenenfalls in das weichere Material des Bauteils 3 eindringen und/oder kann der Schraubenkopf 12 sich aufgrund der Elastizität seines Werkstoffes verformen, wodurch Spannungsspitzen abgebaut werden, die sich andernfalls aufgrund der axialen Vorspannkraft, der axialen Lastaufnahme oder bei temperaturbedingten Formänderungen der Schraube einstellen würden.

## Werkstoff des Gewindeelementes

Das Gewindeelement (Schraube bzw. Gewindebuchse) besteht aus einem Hochleistungskunststoff hoher Temperaturbeständigkeit, hoher Steifigkeit sowie hoher Festigkeit bei geringer Wasseraufnahme. Hinsichtlich der Größe dieser Eigenschaften muss ein möglichst großes Gefälle zu derjenigen des Kunststoffes des Trägerteils bestehen, um die gewünschte Formstabilität in dem Gewindeprofil und in der Schnittgeometrie bei der Schneid- bzw. Umformarbeit zum Formen des Gegengewindes zu erhalten.

Bevorzugte Hochleistungskunststoffe für das Gewindeteil sind Polyphthalamid-GF (PPA-GF); Copolyamid auf der Basis von Polyphthalamid-GF; Polyetherimid-GF (PEI-GF); Polyetheretherketon-GF (PEEK-GF).

In Frage kommen auch die folgenden Werkstoffe: Polyamid - Hochglasgefüllt; Polyphthalamid - Carbonfaserverstärkt; Polyphthalamid - Carbonfaserverstärkt und Glasfaserverstärkt; Copolyamid auf der Basis von Polyphthalamid - Carbonfaserverstärkt; Copolyamid auf der Basis von Polyphthalamid - Carbonfaserverstärkt und glasfaserverstärkt; duromere Kunststoffe.

Es versteht sich, dass dies nur bevorzugte Beispiele für den Werkstoff des Gewindeelementes sind; so können auch andere thermische Hochleistungskunststoffe verwendet werden.

## Gewindebuchse

Wie bereits erwähnt, gelten die obigen Ausführungen hinsichtlich des Gewindeprofils einschließlich der Schneidgeometrie sowie den Anschnittbereich nicht nur für die Kunststoffschraube 4, sondern auch für die Gewindebuchse 6.

Ausführungsbeispiele der Gewindebuchse 6 sind in den Figuren 7 bis 12 dargestellt.

Bei der Ausführungsform der Fign. 7, 8 hat die Gewindebuchse 6 ein Innengewinde 50, das sich über die gesamte axiale Länge der Gewindebuchse 6 erstreckt. Das Werkzeug zum Einschrauben der Gewindebuchse 6 in die Aufnahmebohrung des Trägerteils muss daher am Innengewinde 50 angreifen, wie im folgenden noch genauer erläutert wird.

Bei dem Ausführungsbeispiel der Fign. 9, 10 ist die Gewindebuchse 6a zusätzlich zu dem Innengewinde 50 mit einem Innenantriebsmittel 52 versehen, das im dargestellten Ausführungsbeispiel als Innensechsrund ausgebildet ist, welches lediglich an einem axialen Ende der Gewindebuchse 6a vor-gesehen ist. Stattdessen könnte auch ein Innenmehrkant in das Innengewinde 50 der Gewindebuchse 6a eingearbeitet sein.

Die Figuren 11 und 12 zeigen eine Gewindebuchse 6b, bei der das Außengewinde 10A als Feingewinde ausgebildet ist. Wie bereits oben im Zusammenhang mit dem Gewindeprofil erläutert wurde, entsteht das Feingewinde 10A dadurch, dass das bevorzugte Gewindeprofil gemäß der Ausführungsform A und B verwendet wird, wobei lediglich der Außendurchmesser $D_A$ entsprechend vergrößert wird.

Wie bereits erwähnt, ist die Gewindebuchse 6b der Figuren 11, 12 aus vier radial gegeneinander versetzten Winkelsegmenten zusammengesetzt, so dass sich vier Schneidkanten 36 ergeben. Den Schneidkanten 36 sind im dargestellten Ausführungsbeispiel vier Spannuten 38 zugeordnet. Aufgrund der größeren Anzahl der Schneidkanten 36 ergibt sich eine verbesserte Verteilung der Schneidkraft über den Umfang sowie eine bessere Zentrierung der Gewindebuchse in der Aufnahmebohrung.

Die Gewindebuchse wird in die zylindrisch geformte oder gebohrte Aufnahmebohrung des Trägerteils nachträglich eingebracht, bei dem es sich um ein Kunststoffformteil geringer Festigkeit handeln kann. Beim Herstellen des Kunststoffformteils durch Spritzgießen ist dann ein aufwendiges Gewindeentformen nicht mehr erforderlich. Die aus einem Hochleistungskunststoff bestehende Gewindebuchse wertet somit durch ihr hochfestes Gewinde das Kunststoffformteil in seiner Funktion auf.

Das Innengewinde 50 der Gewindebuchse 6 bzw. 6a bzw. 6b kann mit einer Gewindesicherung durch eine spezielle Formgebung des Gewindes z.B. in Form eines Steigungsversatzes, eine Durchmesserveränderurig oder durch einen partiellen gewindefreien Bereich versehen werden, um die einzudrehende Schraube (nicht gezeigt) im Innengewinde zu verklemmen.

## Montagewerkzeug

Das in Fig. 24 dargestellte Werkzeug dient zum Einbringen der Gewindebuchse 6 gemäß den Figuren 7 und 8 in die Aufnahmebohrung 20 eines als Kunststoffformteil ausgebildeten Trägerteils 2a. Das Werkzeug besteht aus einem drehend antreibbaren Werkzeugkörper 54, der einen axial verlaufenden Aufnahmedorn 56, einen daran angrenzenden Anschlagabschnitt 58 größeren Durchmessers und einen an diesen angrenzenden Antriebsabschnitt 60 aufweist. Der Aufnahmedorn 56 ist als axial verlaufender Bolzen mit einem am Anschlagabschnitt 58 angrenzenden, relativ kurzen Gewindeabschnitt 62 und einem an diesem angrenzenden zylindrischen Abstützabschnitt 64 ausgebildet. Das Gewinde des Gewindeabschnitts 62 passt zu dem Innengewinde 50 der Gewindebuchse 6, während der Durchmesser des zylindrischen Abschnittes 64 dem Kerndurchmesser des Innengewindes 50 entspricht.

Bei dem Montagevorgang wird zunächst die Gewindebuchse 6 auf den kurzen Gewindeabschnitt 62 "aufgespindelt", bis die Gewindebuchse 6 an dem Anschlagabschnitt 58 anschlägt. Die Gewindebuchse 6 kann nun mit Hilfe des Werkzeugkörpers 54 in die Aufnahmebohrung 20 eingedreht werden. Bei diesem Vorgang stützt der zylindrische Abschnitt 64 des Aufnahmedorns 56 die Gewindebuchse 6 von innen her ab. Sobald der Anschlagabschnitt 58 an dem Trägerteil 1 anschlägt, ist der Montagevorgang beendet. Der Aufnahmedorn 56 kann nun durch Drehen des Werkzeugkörpers 54 in der entgegengesetzten Richtung "ausgespindelt" werden. Aufgrund der kurzen Länge des Gewindeabschnittes 62 erfordert das Ein- und Ausspindeln nur wenig Zeit.

Das in Fig. 25 dargestellte Werkzeug dient zum Einbringen der in den Figuren 9 und 10 dargestellten Gewindebuchse 6a, die mit einem Innenantriebsmittel 52 versehen ist. Das Werkzeug weist wiederum einen drehend antreibbaren Werkzeugkörper 54a mit einem Aufnahmedorn 56a, einem Anschlagabschnitt 58 und einem Antriebsabschnitt 60 auf. In diesem Fall ist jedoch der Aufnahmedorn 56a als gewindefreier Bolzen mit einem zylindrischen Abschnitt 66 und einem Antriebsabschnitt ausgebildet, der ein Antriebsmittel 68 passend zu dem Innenantriebsmittel 52 der Gewindebuchse 6a aufweist.

Der Montagevorgang ist bei diesem Werkzeug deutlich vereinfacht, da die Gewindebuchse 6a zu Beginn des Montagevorgangs lediglich axial auf den Aufnahmedorn 56a aufgesteckt werden muss, während am Ende des Montagevorgangs der Aufnahmedorn 56a einfach axial aus der Gewindebuchse 6a herausgezogen werden kann.

Das Werkzeug der Fig. 25 hat darüber hinaus den Vorteil, dass es nach dem Einschraubvorgang eine axiale Verstellung der Gewindebuchse 6a in der Aufnahmebohrung erlaubt. Es ist somit eine Feinjustierung der Gewindebuchse 6a hinsichtlich ihrer axialen Lage in dem Sinne möglich, dass die Gewindebuchse um einen vorgegebenen Betrag axial aus der Aufnahmebohrung 20 vorsteht, um mit einer Gegenfläche (nicht gezeigt) in Anlage gebracht zu werden.

## Verfahren zum Herstellen einer unlösbaren Verbindungsanordnung durch Reibung

Wie vorstehend erläutert wurde, kann das Gewindeelement (Schraube oder Gewindebuchse) durch einen einfachen Schraubvorgang in die glattwandige Aufnahmebohrung des Trägerteils eingebracht werden. Es entsteht dann eine Verbindungsanordnung 1, bei der das Gewindeelement durch "Ausschrauben" wieder aus der Aufnahmebohrung entfernt werden kann.

Gemäß einem weiteren Aspekt der Erfindung kann das aus Kunststoff bestehende Gewindeelement in die Aufnahmebohrung des Trägerteils auch in der Weise eingebracht werden, dass eine unlösbare, gas- und flüssigkeitsdichte Verbindung zwischen Gewindeelement und Trägerteil entsteht.

Hierzu wird das Gewindeelement (Kunststoffschraube oder -gewindebuchse) in die glattwandige Aufnahmebohrung des Trägerteils mit so hoher Drehzahl eingeschraubt, dass der Kunststoff des Trägerteils, bei dem es sich um einen hochfesten glasgefiillten Kunststoff in Form eines Thermoplasten handelt, durch die Reibungswärme plastifiziert wird. Hierbei fördert das Außengewinde des Gewindeelementes den plastifizierten Kunststoff des Trägerteils entgegen der Einschraubrichtung. Dieser plastifizierte Kunststoff bildet nach seiner Erstarrung eine geschlossene Umhüllung des Außengewindes des Gewindeelementes. Am Ende des Schraubvorganges wird die Drehzahl schlagartig (ohne Nachlauf) auf Null reduziert. Andernfalls würde das Gefüge der geschlossenen Umhüllung des Gewindeelementes wieder aufgerissen werden, so dass die angestrebte Dichtigkeit nicht gegeben wäre. Aufgrund des "Eigenschaftgefälles" bzw. der unterschiedlichen Schmelztemperaturen der beiden Kunststoffe (Gewindeelement/Trägerteil) bleibt das Gewindeelement unbeschädigt. Mit diesem "Rotationsreibverfahren" lassen sich Montagezeiten von weniger als 2 s erzielen.

**Patentansprüche**

1. Verbindungsanordnung mit einem Trägerteil (2) aus Kunststoff und einem Gewindeelement (4; 6) aus Kunststoff, welches in eine Aufnahmebohrung (20) des Trägerteils (2) eingeschraubt ist und einen Kern (8) mit einer Mittelachse (M) sowie ein Außengewinde (10) mit mindestens einem über mehrere Windungen verlaufenden Gewindegang (11) aufweist, der beim Einschrauben in die glattwandig ausgebildete Aufnahmebohrung (20) des Trägerteils (2) durch einen Schneidvorgang und/oder eine Materialverformung ein Gegengewinde (26) in der Aufnahmebohrung (20) des Trägerteils (2) formt, wobei das Gewindeelement (4; 6) aus mehreren Winkelsegmenten (34a, 34b) besteht, die in axialer Richtung gesehen bogenförmige Umrisse haben, deren Krümmungsmittelpunkte (Ma, Mb) gegenüber der Mittelachse (M) des Gewindeelementes (4; 6) radial so versetzt sind, dass jeweils benachbarte Winkelsegmente am Umfang stufenförmig gegeneinander abgesetzt sind, um stufenförmige Absätze zu bilden, **dadurch gekennzeichnet, dass** die stufenförmigen Absätze so angeordnet sind, dass sie in Einschraubrichtung wirksame Schneidkanten (36) bilden.

2. Verbindungsanordnung nach Anspruch 1, **dadurch gekennzeichnet, dass** die bogenförmigen Umrisse des Gewindeganges (11) der Winkelsegmente (34a, 34b) ausgehend von einer Schneidkante (36) einen Freiwinkel (β) mit einem gedachten umhüllenden Kreis (K) einschließen, dessen Mittelpunkt auf der Mittelachse (M) des Gewindeelementes liegt, wobei der Freiwinkel (β) für einen sichelförmigen Freiraum sorgt, der ausgehend von der jeweiligen Schneidkante (36) entgegen der Einschraubrichtung größer wird.

3. Verbindungsanordnung nach Anspruch 2, **dadurch gekennzeichnet, dass** der Freiwinkel (β) 0,5 bis 5°, vorzugsweise 0,5 bis 2° und insbesondere 1° beträgt.

4. Verbindungsanordnung nach einem der vorhergehenden Ansprüche, **dadurch gekennzeichnet, dass** die Krümmungsmittelpunkte (Ma, Mb) der bogenförmigen Umrisse der Winkelsegmente (34a, 34b) gegenüber der Mittelachse (M) des Gewindeelementes (4; 6) in entgegengesetzten radialen Richtungen um einen Betrag X versetzt sind, welcher folgende Werte hat:

$$X = 0{,}10 \text{ mm für } D_{Nenn} \leq 8 \text{ mm}$$

$$X = 0{,}15 \text{ mm für } D_{Nenn} > 8 \text{ mm und } D_{Nenn} \leq 12 \text{ mm}$$

$$X = 0{,}20 \text{ mm für } D_{Nenn} > 12 \text{ mm}$$

worin $D_{Nenn}$ das Zweifache des Krümmungsradius (R) der bogenförmigen Umrisse des Gewindeganges (11) der Winkelsegmente (34a, 34b) beträgt.

5. Verbindungsanordnung nach einem der Ansprüche 1 bis 4, **dadurch gekennzeichnet, dass** für Trägerteile (2) eines Werkstoffes, der zum Formen des Gegengewindes (26) überwiegend einen Schneidvorgang erfordert, der Gewindegang (11) der Winkelsegmente (34a, 34b) jeweils mit einer Spannut (38) versehen ist, die sich über die Länge des Gewindeelementes (4; 6) erstreckt und so angeordnet ist, dass sie die zugehörige Schnittkante (36) entsprechend vergrößert.

6. Verbindungsanordnung nach einem der Ansprüche 1 bis 4, **dadurch gekennzeichnet, dass** für Trägerteile (2) eines Werkstoffes, der zum Formen des Gegengewindes (26) überwiegend eine Materialverformung erfordert, der Gewindegang (11) der Winkelsegmente (34a, 34b) ohne Spannut ausgebildet ist.

**7.** Verbindungsanordnung nach einem der vorhergehenden Ansprüche, **dadurch gekennzeichnet, dass** die Aufnahmebohrung (20) des Trägerteils (2) im Einlaufbereich eine Senkbohrung (22) aufweist, deren Durchmesser (D2) mindestens so groß wie der maximale Außendurchmesser ($D_A$) des Außengewindes (10) des Gewindeelementes (4; 6) ist.

**8.** Verbindungsanordnung nach einem der vorhergehenden Ansprüche, **dadurch gekennzeichnet, dass** der Steigungswinkel des Außengewindes (10) des Gewindeelementes (4; 6) kleiner als der Selbsthemmungswinkel der Kunststoffpaarung des Gewindeelementes und Trägerteils (2) ist.

**9.** Verbindungsanordnung nach einem der vorhergehenden Ansprüche, **dadurch gekennzeichnet, dass** der Durchmesser (D1) der Aufnahmebohrung (20) des Trägerteils (2) auf das Außengewinde (10) des Gewindeelementes (4; 6) so abgestimmt ist, dass die Außenfläche (32) des Kerns (8) des Gewindeelementes (4; 6) beim Formen des Gegengewindes (26) von der Materialverformung frei bleibt.

**10.** Verbindungsanordnung nach einem der vorhergehenden Ansprüche, **dadurch gekennzeichnet, dass** das Gewindeelement (4; 6) an seinem einen axialen Ende einen konusförmig ausgebildeten Anschnittbereich (18) mit einer Anschnittfase (40) eines vorgegebenen Fasenwinkels ($\gamma$) und einem Anschnittdurchmesser ($D_F$) aufweist.

**11.** Verbindungsanordnung nach Anspruch 10, **dadurch gekennzeichnet, dass** für Trägerteile (2) eines Werkstoffes, der zum Formen des Gegengewindes (26) überwiegend einen Schneidvorgang erfordert, der Fasenwinkel ($\gamma$) der Anschnittfase (40) ungefähr 20° und der Anschnittdurchmesser ($D_F$) ungefähr das 0,7-fache des maximalen Außendurchmessers ($D_A$) des Außengewindes (10) beträgt.

**12.** Verbindungsanordnung nach Anspruch 11, **dadurch gekennzeichnet, dass** der Anschnittbereich (18) mit einem Spanraum (42) versehen ist, dessen Höhe ungefähr das 2-fache der Steigung (P) des Außengewindes (10A) und dessen Tiefe ungefähr das 3-fache der Profilhöhe (Z) des Außengewindes (10A) beträgt.

**13.** Verbindungsanordnung nach Anspruch 10, **dadurch gekennzeichnet, dass** für Trägerteile (2) eines Werkstoffs, der zum Formen des Gegengewindes überwiegend eine Materialverformung erfordert, der Fasenwinkel ($\gamma$) der Anschnittfase (40) ungefähr 30° und der Anschnittdurchmesser ($D_F$) ungefähr das 0,5-fache des maximalen Außendurchmessers ($D_A$) des Außengewindes (10B) beträgt.

**14.** Verbindungsanordnung nach Anspruch 13, **dadurch gekennzeichnet, dass** der Anschnittbereich (18) ohne Spanraum ausgebildet ist.

**15.** Verbindungsanordnung nach einem der vorhergehenden Ansprüche, **dadurch gekennzeichnet, dass** das Gewindeelement eine Schraube (4) mit einem Schraubenschaft und einem Schraubenkopf (12) ist.

**16.** Verbindungsanordnung nach Anspruch 15, **dadurch gekennzeichnet, dass** die Außenfläche (32) des Kerns (10) des Schraubenschaftes mit dem Schraubenkopf (12) durch einen Übergangsbereich (14) mit einer konisch verlaufenden Außenfläche (44) verbunden ist, die an ihren Enden mit Rundungen ($R_a$, $R_b$) versehen ist.

**17.** Verbindungsanordnung nach Anspruch 15 oder 16, **dadurch gekennzeichnet, dass** der Übergangsbereich (14) zwischen dem Kern (10) des Schraubenschaftes und dem Schraubenkopf (12) eine Wandstärke (W) hat, die größer als das 0,5-fache des Durchmessers der Außenfläche (32) des Kerns (10) ist.

**18.** Verbindungsanordnung nach einem der Ansprüche 15 bis 17, **dadurch gekennzeichnet, dass** an der Außenfläche des Übergangsbereiches (14) zwischen Schraubenschaft und Schraubenkopf (12) in Axialebene liegende Zentrierrippen (46) vorgesehen sind, die sich beim Verschrauben des Trägerteils (2) mit einem weiteren Bauteil (3) an der Umfangswand einer Durchgangsbohrung (24) des weiteren Bauteils (3) abstützen.

**19.** Verbindungsanordnung nach einem der Ansprüche 15 bis 18, **dadurch gekennzeichnet, dass** die Unterseite des Schraubenkopfes (12) konkav so ausgebildet ist, dass im Randbereich des Schraubenkopfes eine im wesentlichen kreislinienförmige Ringauflage (48) vorhanden ist.

**20.** Verbindungsanordnung nach einem der Ansprüche 1 bis 14, **dadurch gekennzeichnet, dass** das Gewindeelement eine Gewindebuchse (6; 6a) mit einem Innengewinde (50) ist.

**21.** Verbindungsanordnung nach Anspruch 20, **dadurch gekennzeichnet, dass** die Gewindebuchse (6a) mit einem zusätzlich zu dem Innengewinde (50) vorgesehenen Innenantriebsmittel (52) versehen ist.

**22.** Verbindungsanordnung nach einem der vorhergehenden Ansprüche, **dadurch gekennzeichnet, dass** das Gewindeelement (4; 6) aus einem Hochleistungskunststoff besteht, dessen Temperaturbeständigkeit, Steifigkeit und Festigkeit wesentlich größer als die des Kunststoffes des Trägerteils (2) sind.

**23.** Verbindungsanordnung nach Anspruch 22, **dadurch gekennzeichnet, dass** der Hochleistungskunststoff Polyphthalamid-GF (PPA-GF) oder Copolyamid auf der Basis von Polyphthalamid-GF oder Polyetherimid-GF (PEI-GF) oder Polyetheretherketon-GF (PEEK-GF) oder Polyamid -Hochglasgefiillt oder Polyphthalamid - Carbonfaserverstärkt oder Polyphthalamid - Carbonfaserverstärkt und Glasfaserverstärkt oder Copolyamid auf der Basis von Polyphthalamid - Carbonfaserverstärkt oder Copolyamid auf der Basis von Polyphthalamid - Carbonfaserverstärkt und glasfaserverstärkt oder ein duromerer Kunststoff ist.

**24.** Gewindeelement aus Kunststoff in Form einer Schraube oder Gewindebuchse für eine Verbindungsanordnung nach einem der vorhergehenden Ansprüche, welches einen Kern (8) mit einer Mittelachse (M) sowie ein Außengewinde (10) mit mindestens einem über mehrere Windungen verlaufenden Gewindegang (11) aufweist, der beim Einschrauben in eine glattwandig ausgebildete Aufnahmebohrung (20) eines Trägerteils (2) durch einen Schneidvorgang und/ oder eine Materialverformung ein Gegengewinde (26) in der Aufnahmebohrung (20) des Trägerteils (2) formt, wobei das Gewindeelement (4; 6) aus mehreren Winkelsegmenten (34a, 34b) besteht, die in axialer Richtung gesehen bogenförmige Umrisse haben, deren Krümmungsmittelpunkte (Ma, Mb) gegenüber der Mittelachse (M) des Gewindeelementes (4; 6) radial so versetzt sind, dass jeweils benachbarte Winkelsegmente am Umfang stufenförmig gegeneinander abgesetzt sind, um stufenförmige Absätze zu bilden, **dadurch gekennzeichnet, dass** die stufenförmigen Absätze so angeordnet sind, dass sie in Einschraubrichtung wirksame Schneidkanten (36) bilden.

**Claims**

**1.** A joining assembly with a support member (2) of plastic material and a threaded element (4; 6) of plastic material which is threaded into a receiving bore (20) of the support member (2) and comprises a core (8) with a central axis (M) and external threads (10) having at least one thread (11) extending for a plurality of revolutions, which thread, when the threaded element is threaded into the smooth wall of the receiving bore (20) of the support member (2), forms a counter thread (26) in the receiving bore (20) of the support member (2) by a cutting operation and/or deforming operation, the threaded element (4; 6) comprising a plurality of angular segments (34a, 34b) which, as seen in an axial direction, are of arcuate peripheries having centres of curvature (Ma, Mb) radially offset with respect to the central axis (M) of the threaded element such that adjacent angular segments are offset at their peripheries to form step-like shoulders, **characterized in that** the step-like shoulders are arranged such that they form cutting edges (36) acting in the threading-in direction.

**2.** The joining assembly of claim 1, **characterized in that** arcuate peripheries of the thread (11) of the angular segments (34a, 34b) and a virtual circumscribing circle (K) the center of which lies on the central axis (M) of the threaded element, include a clearance angle (β), the clearance angle (β) providing a sickle-shaped clearance space which increases from the respective cutting edge (36) opposite to the threading-in direction.

**3.** The joining assembly of claim 2, **characterized in that** the clearance angle (β) is 0.5° to 5°, preferably 0,5° to 2°, and in particular 1°.

**4.** The joining assembly of any of the preceding claims **characterized in that** the centers of curvature (Ma, Mb) of the arcuate peripheries of the angular segments (34a, 34b) are offset to the central axis (M) of the threaded element (4; 6) in opposite radial directions by an amount X as follows:

$$X = 0.10 \text{ mm for } D_{Nenn} \leq 8 \text{ mm}$$

$$X = 0.15 \text{ mm for } D_{Nenn} > 8 \text{ mm and } D_{Nenn} \leq 12 \text{ mm}$$

$$X = 0.20 \text{ mm for } D_{Nenn} > 12 \text{ mm}$$

wherein $D_{Nenn}$ is twice the radius of curvature (R) of the arcuate peripheries of the thread (11) of the angular segments (34a, 34b).

5. The joining assembly of any of claims 1 to 4, **characterized in that** for support members (2) of a material which requires substantially a cutting operation for forming said internal threaded portion (26), the thread (11) of the angular segments (34a, 34b) each is provided with a chip groove (38) extending along the length of the threaded element (4; 6) and being arranged so as to elongate an associated one of said cutting edges (36).

6. The joining assembly of any of claims 1 to 4 **characterized in that** for support members (2) of a material which requires substantially a deforming operation for forming said internal threaded portion (26), the thread (11) of the angular segments (34a, 34b) does not include any chip grooves.

7. The joining assembly of any of the preceding claims **characterized in that** the receiving bore (20) of the support member (2) has a counterbore (22) of a diameter (D2) at least as large as the major diameter ($D_A$) of the thread (11) of the threaded element (4; 6).

8. The joining assembly of any of the preceding claims, **characterized in that** the thread (11) of the threaded element (4; 6) has a lead angle which is less than a self-locking angle of said plastic materials of the threaded element (4; 6) and the support member (2).

9. The joining assembly of any of the preceding claims **characterized in that** the receiving bore (20) of the support member (2) has a diameter (D1) adapted to the thread (11) of the threaded element (4; 6) such that said external surface (32) of the core (8) of the threaded element (4; 6) will not be subject to any deforming action when said internal threaded portion (26) is being formed.

10. The joining assembly of any of the preceding claims **characterized in that** the threaded element (4; 6) has an axial free end provided with a conical tip area (18) having a cutting chamfer (40) of a predetermined chamfer angle (γ) and a predetermined cutting diameter ($D_F$).

11. The joining assembly of claim 10, **characterized in that** for a support member (2) of a material which requires substantially a cutting operation for forming said internal threaded portion (26), said chamfer angle (γ) of the cutting chamfer (40) is about 20° and said cutting diameter ($D_F$) is about 0,7 times the major diameter ($D_A$) of the thread (10).

12. The joining assembly of claim 11, **characterized in that** said tip area (18) is provided with a chip recess (42) of a height which is about two times the pitch (P) of the thread (10A), and of a depth which is substantially three times the profile height (Z) of the thread (10A).

13. The joining assembly of claim 10, **characterized in that** for a support member (2) of a material which requires substantially a deforming operation for forming said internal threaded portion, said chamfer angle (γ) of said cutting chamfer (40) is about 30° and said cutting diameter ($D_F$) is about .5 times the major diameter ($D_A$) of the thread (10B).

14. The joining assembly of claim 13, **characterized in that** said tip area (18) does not include any chip recess.

15. The joining assembly of any of the preceding claims **characterized in that** said threaded element is a screw (4) comprising a shaft and a head (12).

16. The joining assembly of claim 15, **characterized in that** said external surface (32) of the core (8) of the threaded element is joined to said head (12) by a transition area (14) comprising a conical outer surface (44) having radiussed end portions ($R_a$, $R_b$).

17. The joining assembly of claim 15 or 16, **characterized in that** said transition area (14) between the core (8) of the threaded element and the head (12) is of a wall thickness (W) which exceeds half the diameter of said external surface (32) of the core (8).

18. The joining assembly of any of claims 15 to 17 **characterized in that** said transition area (14) has an outer surface between said shaft and said head (12) which is provided with centering ribs (46) disposed in axial planes and engaging a wall of a thrubore (24) of a further member (3) when said support member (2) is joined to said further member (3) by said threaded element.

19. The joining assembly of any of claims 15 to 18 **characterized in that** said head (12) of said screw has a concave bottom face of a shape such that said head provides for a substantially circular line contact (48) in a radially outer area thereof.

20. The joining assembly of any of claims 1 to 14 **characterized in that** said threaded element is a threaded sleeve (6; 6a) having an internal thread (50).

21. The joining assembly of claim 20, **characterized in that** said threaded sleeve (6a) is provided with an internal drive means (52) additional to said internal thread (50).

22. The joining assembly of any of the preceding claims **characterized in that** said threaded element (4; 6) is made of a highly resistant plastic material of substantial thermal resistance, stiffness and strength which substantially exceed those of the plastic material of the support member (2).

23. The joining assembly of claim 22, **characterized in that** said highly resistant plastic material is a polyphthalamid-GF (PPA-GF) or a copolyamid on the basis of polyphthalamid-GF or polyetherimid-GF (PEI-GF) or polyetheretherketon-GF (PEEK-GF) or fiber glass reinforced polyamid or carbon fiber enforced polyphthalamid or carbon fiber reinforced and glass fiber reinforced polyphthalamid or copolyamid on the basis of carbon fiber reinforced polyphthalamid or copolyamid on the basis of carbon fiber reinforced and glass fiber reinforced polyphthalamid or a duromeric plastic material.

24. A threaded element of plastic material comprising a screw or a threaded sleeve for a joining assembly of any of the preceding claims, the threaded element comprising a core (8) with a central axis (M) and external threads (10) having at least one thread (11) extending for a plurality of revolutions, which thread, when the threaded element is threaded into the smooth wall of the receiving bore (20) of the support member (2), forms a counter thread (26) in the receiving bore (20) of the support member (2) by a cutting operation and/or deforming operation, the threaded element (4; 6) comprising a plurality of angular segments (34a, 34b) which, as seen in an axial direction, are of arcuate peripheries having centres of curvature (Ma, Mb) radially offset with respect to the central axis (M) of the threaded element such that adjacent angular segments are offset at their peripheries to form step-like shoulders, **characterized in that** the step-like shoulders are arranged such that they form cutting edges (36) acting in the threading-in direction.

## Revendications

1. Arrangement de relation avec une partie support (2) en matière plastique et un élément fileté (4 ; 6) en matière plastique qui est vissé dans un alésage de réception (20) de la partie support (2) et présente un noyau (8) avec un axe central (M) ainsi qu'un filet extérieur (10), avec au moins un pas de vis (11) réparti sur plusieurs spires qui, lors du vissage dans l'alésage de réception (20), constitué avec une paroi lisse, de la partie support (2) forme, par un processus de coupe et/ou une déformation de matériau, un contre-filet (26) dans l'alésage de réception (20) de la partie support (2), l'élément fileté (4 ; 6) se composant de plusieurs segments d'angle (34a, 34b) qui, vus dans la direction axiale, ont des profils arqués dont les points centraux de courbure (Ma, Mb) sont, par rapport à l'axe central (M) de l'élément fileté (4 ; 6), décalés radialement de sorte que des segments d'angle respectivement voisins sont étagés en forme de degrés sur la circonférence les uns en regard des autres pour former des étagements en forme de degrés, **caractérisé en ce que** les étagements en forme de degrés sont disposés de telle sorte qu'ils forment des arêtes de coupe (36) actifs dans le sens de vissage.

2. Arrangement de relation selon la revendication 1, **caractérisé en ce que** les profils arqués du pas de vis (11) des segments d'angle (34a, 34b) incluent, en partant d'une arête de coupe (36), un angle de dépouille (β) avec un cercle (K) enveloppant imaginaire dont le point central est situé sur l'axe central (M) de l'élément fileté, l'angle de dépouille (β) assurant un espace libre en forme de faucille qui augmente en partant de l'arête de coupe (36) respective à l'inverse du sens de vissage.

**3.** Arrangement de relation selon la revendication 2, **caractérisé en ce que** l'angle de dépouille (β) est de 0,5 à 5°, de préférence de 0,5 à 2°, et en particulier de 1°.

**4.** Arrangement de relation selon une des revendications précédentes, **caractérisé en ce que** les points centraux de courbure (Ma, Mb) des profils arqués des segments d'angle (34a, 34b) sont, par rapport à l'axe central (M) de l'élément fileté (4 ; 6), décalés dans des directions radiales opposées d'une quantité X qui a les valeurs suivantes :

$$X = 0,10 \text{ mm pour } D_{nom} \leq 8 \text{ mm}$$

$$X = 0,15 \text{ mm pour } D_{nom} > 8 \text{ mm et } D_{nom} \leq 12 \text{ mm}$$

$$X = 0,20 \text{ mm pour } D_{nom} > 12 \text{ mm}$$

où $D_{nom}$ est égal au double du rayon de courbure (R) des profils arqués du pas de vis (11) des segments d'angle (34a, 34b).

**5.** Arrangement de relation selon une des revendications 1 à 4, **caractérisé en ce que**, pour des parties supports (2) d'un matériau qui exige principalement un processus de coupe pour le formage du contre-filet (26), le pas de vis (11) des segments d'angle (34a, 34b) est respectivement muni d'un écrou de serrage (38) qui s'étend sur la longueur de l'élément fileté (4 ; 6) et est disposé de sorte qu'il augmente en conséquence l'arête de coupe (36) associée.

**6.** Arrangement de relation selon une des revendications 1 à 4, **caractérisé en ce que**, pour des parties supports (2) d'un matériau qui exige principalement une déformation de matériau pour le formage du contre-filet (26), le pas de vis (11) des segments d'angle (34a, 34b) est constitué sans écrou de serrage.

**7.** Arrangement de relation selon une des revendications précédentes, **caractérisé en ce que** l'alésage de réception (20) de la partie support (2) présente dans la zone d'entrée une fraisure (22) dont le diamètre (D2) est au moins aussi grand que le diamètre extérieur ($D_A$) maximal du filet extérieur (10) de l'élément fileté (4 ; 6).

**8.** Arrangement de relation selon une des revendications précédentes, **caractérisé en ce que** l'angle de pas du filet extérieur (10) de l'élément fileté (4 ; 6) est plus petit que l'angle de blocage automatique de l'appariement de matière plastique de l'élément fileté et de la partie support (2).

**9.** Arrangement de relation selon une des revendications précédentes, **caractérisé en ce que** le diamètre (D1) de l'alésage de réception (20) de la partie support (2) est harmonisé avec le filet extérieur (10) de l'élément fileté (4 ; 6) de sorte que la surface extérieure (32) du noyau (8) de l'élément fileté (4 ; 6) demeure exempt de la déformation de matériau lors du formage du contre-filet (26).

**10.** Arrangement de relation selon une des revendications précédentes, **caractérisé en ce que** l'élément fileté (4 ; 6) présente, sur une de ses extrémités axiales, une zone d'attaque (18) constituée en forme de cône, avec un chanfrein d'attaque (40) d'un angle de chanfrein (γ) prédéfini et avec un diamètre d'attaque ($D_F$).

**11.** Arrangement de relation selon la revendication 10, **caractérisé en ce que**, pour des parties supports (2) d'un matériau qui exige principalement un processus de coupe pour le formage du contre-filet (26), l'angle de chanfrein (γ) du chanfrein d'attaque (40) est d'environ 20°, et le diamètre d'attaque ($D_F$) représente environ 0,7 fois le diamètre extérieur ($D_A$) maximal du filet extérieur (10).

**12.** Arrangement de relation selon la revendication 11, **caractérisé en ce que** la zone d'attaque (18) est munie d'un logement de copeaux (42) dont la hauteur est environ le double du pas (P) du filet extérieur (10A), et dont la profondeur est environ le triple de la hauteur de profil (Z) du filet extérieur (10A) .

**13.** Arrangement de relation selon la revendication 10, **caractérisé en ce que**, pour des parties supports (2) d'un matériau qui exige principalement un déformation de matériau pour le formage du contre-filet, l'angle de chanfrein (γ) du chanfrein d'attaque (40) est d'environ 30°, et le diamètre d'attaque ($D_F$) représente environ 0,5 fois le diamètre extérieur ($D_A$) maximal du filet extérieur (10B).

14. Arrangement de relation selon la revendication 13, **caractérisé en ce que** la zone d'attaque (18) est constituée sans logement de copeaux.

15. Arrangement de relation selon une des revendications précédentes, **caractérisé en ce que** l'élément fileté est une vis (4) avec une tige de vis et une tête de vis (12).

16. Arrangement de relation selon la revendication 15, **caractérisé en ce que** la surface extérieure (32) du noyau (10) de la tige de vis est raccordée à la tête de vis (12) par une zone de transition (14) avec une surface extérieure (44) conique qui est munie d'arrondis ($R_a$, $R_b$) à ses extrémités.

17. Arrangement de relation selon la revendication 15 ou 16, **caractérisé en ce que** la zone de transition (14) a, entre le noyau (10) de la tige de vis et la tête de vis (12), une épaisseur de paroi (W) qui est plus grande que 0,5 fois le diamètre de la surface extérieure (32) du noyau (10).

18. Arrangement de relation selon une des revendications 15 à 17, **caractérisé en ce que**, sur la surface extérieure de la zone de transition (14), entre la tige de vis et la tête de vis (12), il est prévu des nervures de centrage (46) situées dans le plan axial qui, lors du vissage de la partie support (2) avec un autre composant (3), s'appuient sur la paroi circonférentielle d'un alésage débouchant (24) de l'autre composant (3).

19. Arrangement de relation selon une des revendications 15 à 18, **caractérisé en ce que** le côté inférieur de la tête de vis (12) est constitué de façon concave de sorte que, dans la zone de bord de la tête de vis, il existe un appui annulaire (48) essentiellement circulaire.

20. Arrangement de relation selon une des revendications 1 à 14, **caractérisé en ce que** l'élément fileté est une douille filetée (6 ; 6a) avec filet intérieur (50).

21. Arrangement de relation selon la revendication 20, **caractérisé en ce que** la douille filetée (6a) est munie d'un moyen d'entraînement intérieur (52) prévu en plus du filet intérieur (50).

22. Arrangement de relation selon une des revendications précédentes, **caractérisé en ce que** l'élément fileté (4 ; 6) est réalisé dans une matière plastique haute performance dont la résistance à la température, la rigidité et la solidité sont bien plus élevées que celles de la matière plastique de la partie support (2).

23. Arrangement de relation selon la revendication 22, **caractérisé en ce que** la matière plastique haute performance est un polyphtalamide-GF (PPA-GF) ou un copolyamide à base de polyphtalamide-GF ou un polyétherimide-GF (PEI-GF) ou un polyétheréthercétone-GF (PEEK-GF) ou un polyamide - très chargé en verre ou un polyphtalamide - renforcé de fibre de carbone ou un polyphtalamide - renforcé de fibre de carbone et renforcé de fibre de verre ou un copolyamide à base de polyphtalamide - renforcé de fibre de carbone ou un copolyamide à base de polyphtalamide - renforcé de fibre de carbone et renforcé de fibre de verre ou une matière plastique duromère.

24. Elément fileté en matière plastique sous forme d'une vis ou d'une douille filetée pour un arrangement de relation selon une des revendications précédentes, qui présente un noyau (8) avec un axe central (M) ainsi qu'un filet extérieur (10) avec au moins un pas de vis (11) réparti sur plusieurs spires qui, lors du vissage dans un alésage de réception (20), constitué avec une paroi lisse, de la partie support (2), forme, par un processus de coupe et/ou une déformation de matériau, un contre-filet (26) dans l'alésage de réception (20) de la partie support (2), l'élément fileté (4 ; 6) se composant de plusieurs segments d'angle (34a, 34b) qui, vus dans la direction axiale, ont des profils arqués dont les points centraux de courbure (Ma, Mb) sont, par rapport à l'axe central (M) de l'élément fileté (4 ; 6), décalés radialement de sorte que des segments d'angle respectivement voisins sont étagés en forme de degrés sur la circonférence les uns en regard des autres pour former des étagements en forme de degrés, **caractérisé en ce que** les étagements en forme de degrés sont disposés de telle sorte qu'ils forment des arêtes de coupe (36) actifs dans le sens de vissage.

FIG 1

FIG 2

16   4A

12

10A

8A

FIG 3   4A

FIG 4   4A

FIG 5   4B

12

10B

8B

FIG 6   4B

EP 1 715 198 B1

FIG 7

6

50

FIG 9

6a

50

52

FIG 8

36 38 6

FIG 10

6a

FIG 11

6b

10A

FIG 12

10A

36

38

6b

38

36

19

## FIG 13

## FIG 15

## FIG 14

## FIG 16

## FIG 17

## FIG 18

## FIG 19

## FIG 21

## FIG 20

## FIG 22

## FIG 23

## FIG 24

## FIG 25

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4227272 A
- DE 4227272 A1
- DE 4227274 C2
- DE 2317736

- DE 4227
- DE 274 C2
- DE 3201846 A1
- DE 9115162 U1